# FASCICULE DE BREVET EUROPEEN

(11) **EP 1 818 534 B1**
(45) Date de publication et mention de la délivrance du brevet: **16.09.2009**
(21) Numéro de dépôt: 07300761.9
(22) Date de dépôt: 01.02.2007
(51) Int. Cl.: F02M 27/04, F02B 29/00, H05H 1/24

(54) **Procédé et dispositif de suralimentation en air d'un moteur à combustion interne**
Verfahren und Vorrichtung zur Luftaufladung eines Verbrennungsmotors
Method and device for supercharging air in an internal combustion engine

(30) Priorité: 14.02.2006 FR 0650519
(43) Date de publication de la demande: 15.08.2007
(73) Titulaire: Peugeot Citroën Automobiles SA, 78943 Vélizy-Villacoublay Cedex (FR)
(72) Inventeur: Noel, Sébastien, 78370 Plaisir (FR)
(74) Mandataire: Ménès, Catherine

(56) Documents cités:
- DE-A1- 19 621 531
- US-A- 4 380 720
- US-A1- 2003 046 921
- US-B1- 6 504 308

## Description

La présente invention concerne un procédé et un dispositif de suralimentation en air d'un moteur à combustion interne pour véhicule, tout particulièrement pour véhicule automobile.

Les moteurs à combustion interne, aussi bien Diesel qu'essence, sont fréquemment équipés de dispositifs de suralimentation, tel qu'un turbocompresseur. Ce dernier récupère une partie de l'énergie des gaz d'échappement afin de comprimer l'air alimentant le moteur. Les gaz d'échappement entraînent une turbine actionnant un compresseur, lequel aspire de l'air ambiant, le compresse et l'envoie dans les cylindres du moteur. La compression de l'air permet de "suralimenter" le moteur et de ce fait d'augmenter sa puissance.

Les dispositifs de suralimentation comportent de nombreuses pièces mobiles qui tournent à des vitesses de rotation élevées et qui demandent à être usinées avec précision. Elles peuvent donc s'échauffer et produire une quantité de chaleur non négligeable qu'il est nécessaire d'évacuer. C'est par exemple le cas des turbocompresseurs. Les compartiments moteurs étant de plus en plus encombrés, le refroidissement de ces dispositifs est souvent problématique.

Afin d'améliorer l'efficacité de moteurs à combustion interne, la demande de brevet FR 2491151 publiée le 2-4-1982 décrit un procédé effectuant l'ionisation et la conversion de l'air alimentant le moteur en un mélange gazeux contenant de l'oxyde azoteux (N₂O), des particules d'air chargées positivement et de l'ozone. Ce mélange gazeux permet une combustion plus complète. Ce procédé ne concerne pas la suralimentation du moteur.

Un autre document, la demande de brevet FR 2844000 publiée le 5-3-2004, propose un système pour voiture automobile dans lequel on fait appel aussi à l'ionisation des gaz. Mais il s'agit des gaz d'échappement du moteur et le but poursuivi est d'améliorer le traitement des oxydes d'azote. Le système proposé est donc destiné à lutter contre la pollution.

Le document DE 196 21 531 A1 décrit l'ionisation d'air d'alimentation par micro-ondes.

Il est connu du document US 4 380 720 de déplacer de l'air par ionisation et puis par application d'un champ électrique.

La présente invention propose un procédé et un dispositif de suralimentation d'un moteur à combustion interne ne faisant pas appel à des pièces mobiles. On évite ainsi l'échauffement et l'usure du dispositif.

De façon plus précise, l'invention concerne un procédé de suralimentation en air d'un moteur à combustion interne qui consiste à ioniser de l'air et à accélérer l'air ionisé par un champ électrique avant l'injection de l'air dans la chambre de combustion.

L'ionisation de l'air est avantageusement effectuée en le soumettant à des ondes électromagnétiques de fréquences comprises entre 300 MHz et 300 GHz.

L'invention concerne également un dispositif de suralimentation en air d'un moteur à combustion interne d'un véhicule, le moteur comprenant un circuit d'admission d'air dans lequel l'air admis est accéléré. Selon l'invention, le dispositif comporte des moyens pour ioniser l'air admis et des moyens pour accélérer l'air ionisé à l'aide d'un champ électrique.

Selon le mode de réalisation préféré, les moyens pour ioniser l'air émettent des micro-ondes. Ces moyens comportent avantageusement une chambre d'ionisation et une pluralité de magnétrons disposés autour de la chambre d'ionisation, en couronne par exemple. Les moyens pour accélérer l'air ionisé comportent de préférence une chambre d'accélération comportant une entrée et une sortie, au moins deux électrodes placées dans la chambre d'accélération, l'une desdites électrodes constituant une anode et l'autre une cathode, l'anode étant située sensiblement vers l'entrée de la chambre d'accélération et la cathode étant située sensiblement vers la sortie de la chambre d'accélération, et une source de potentiel électrique continu reliée aux électrodes pour appliquer une différence de potentiel électrique entre les électrodes. L'air ionisé est accéléré entre les électrodes.

Selon un mode de réalisation, l'entrée de la chambre d'accélération est située en aval de la chambre d'ionisation.

Selon un autre mode de réalisation, l'entrée de la chambre d'accélération est située en amont de la chambre d'ionisation, laquelle est contenue dans la chambre d'accélération.

D'autres caractéristiques et avantages de l'invention ressortiront de la description suivante, donnée uniquement à titre d'exemple et faite en référence aux dessins annexés sur lesquels :
- la figure 1 représente schématiquement un premier mode de réalisation de l'invention, en coupe selon un plan comprenant l'axe de symétrie longitudinal du dispositif,
- la figure 2 est une vue de dessus et en coupe selon l'axe BB du dispositif représenté sur la figure 1 ou la figure 2, et
- la figure 3 représente schématiquement, en coupe, un deuxième mode de réalisation de l'invention.

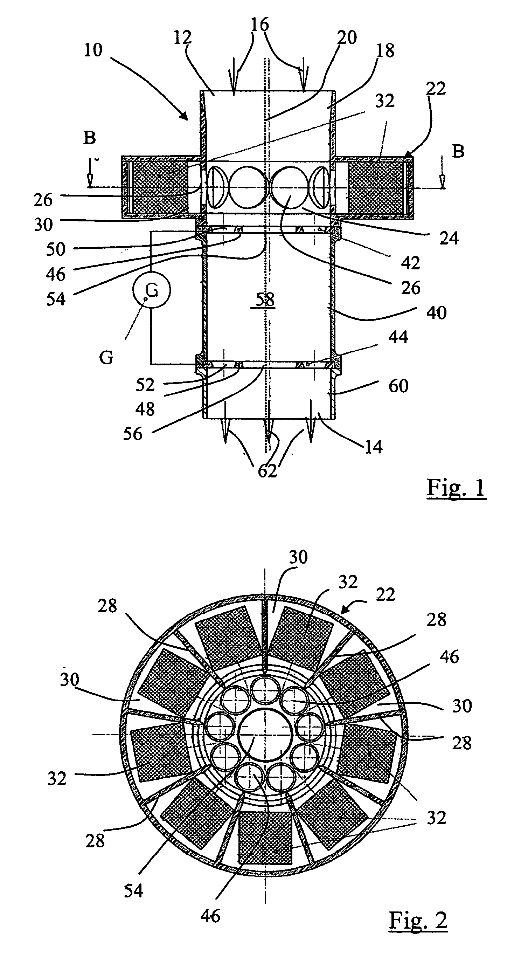

Le dispositif 10 représenté sur les figures 1-3 comporte une entrée d'air 12 et une sortie 14 reliée au circuit d'admission d'air d'un moteur à combustion interne. L'air est prélevé dans le milieu ambiant après avoir été préalablement filtré et pénètre dans le dispositif 10 dans la direction indiquée par les flèches 16. L'air est mis en mouvement selon les flèches 16 lorsque le moteur est en marche.

Le dispositif se compose d'un conduit d'injection 18 de forme cylindrique ayant pour axe longitudinal l'axe de symétrie 20 du dispositif 10. La partie supérieure du conduit d'injection constitue l'entrée 12 du dispositif. Une enceinte 22, de forme torique à section rectangulaire, entoure la partie inférieure du conduit d'injection 18. Cette partie inférieure délimite une chambre d'ionisation 24. Le conduit d'injection 18 comporte des ouvertures circulaires 26, régulièrement espacées, mettant en communication l'enceinte 22 avec la chambre d'ionisation 24. Des cloisons 28 (figure 2) forment des cavités individuelles 30 à l'intérieur de l'enceinte 22. Les cavités 30 débouchent sur la chambre d'ionisation 24 à travers les ouvertures 26.

Des moyens pour ioniser l'air passant dans la chambre d'ionisation 24 sont placés dans l'enceinte 22. De préférence ces moyens sont constitués par des magnétrons 32 munis chacun d'une antenne émettrice de micro-ondes. Un magnétron est un dispositif qui transforme l'énergie électrique en énergie électromagnétique, sous forme de micro-ondes dont la fréquence est comprise entre 300 MHz et 300 GHz.

Un magnétron 32 est placé à l'intérieur de chacune des cavités 30. L'antenne émettrice de micro-ondes de chaque magnétron est disposée en regard de l'une des ouvertures 26, de façon à soumettre l'air passant dans la chambre d'ionisation aux micro-ondes émises par les magnétrons. Un guide d'onde peut éventuellement être intercalé entre l'antenne du magnétron et l'ouverture 26 se trouvant en regard de l'antenne.

Les magnétrons sont alimentés en courant électrique par l'alternateur du véhicule, dès la mise en marche du moteur.

Selon un premier mode de réalisation représenté sur la figure 1, un conduit d'accélération 40, de forme cylindrique et de même axe longitudinal que l'axe de symétrie 20 du dispositif 10, est fixé à l'extrémité inférieure du conduit d'injection 18, en aval de la chambre d'ionisation 24. Les conduits d'injection et d'accélération ont sensiblement le même diamètre interne.

Des moyens pour accélérer l'air ionisé dans la chambre d'ionisation 24 sont disposés dans le conduit d'accélération 40. Ces moyens sont avantageusement constitués par deux électrodes 42 et 44 fixées à l'intérieur du conduit d'accélération 40, l'une 42 à l'entrée du conduit 40, donc en aval de la chambre d'ionisation 24, et l'autre 44 à la sortie du conduit 40. Ces électrodes sont formées chacune par une plaque métallique circulaire 46 ou 48 percée de trous circulaires 50 ou 52 disposées sur le pourtour de la plaque et d'un trou circulaire central 54 ou 56. Les centres des trous 50 et 52 sont alignés selon des axes parallèles à l'axe de symétrie 20. Les centres des trous 54 et 56 sont alignés sur l'axe de symétrie 20. Les électrodes 42 et 44 sont isolées électriquement des différents conduits 18 et 40 et de l'enceinte 22. Ces conduits et cette enceinte sont réalisés en une matière électriquement isolante, en matière plastique ou en matériau composite.

Une source de tension électrique continue G est connectée entre les électrodes 42 et 44. L'électrode 42 est reliée au pôle positif de la source G, constituant ainsi une anode, et l'électrode 44 est reliée au pôle négatif, constituant ainsi une cathode. La différence de potentiel à appliquer entre les deux électrodes dépend de la distance entre les électrodes et de la pression de suralimentation souhaitée. A titre d'exemple, une tension comprise entre 12 et 1000 Volts peut convenir. Cependant, si le rendement d'ionisation dans la chambre 24 ne s'approche pas de 100%, la tension à appliquer aux bornes des électrodes peut être supérieure par exemple à 1000 Volts. L'espace du conduit d'accélération 40 compris entre les deux électrodes constitue une chambre d'accélération 58.

La partie avale du dispositif 10 est constituée par un conduit de sortie cylindrique 60, de mêmes diamètres interne et externe que le conduit d'accélération 40 et de même axe longitudinal que l'axe de symétrie 20. L'extrémité du conduit 60 constitue la sortie 14 du dispositif, laquelle est reliée à la tubulure d'admission d'air du moteur à combustion interne.

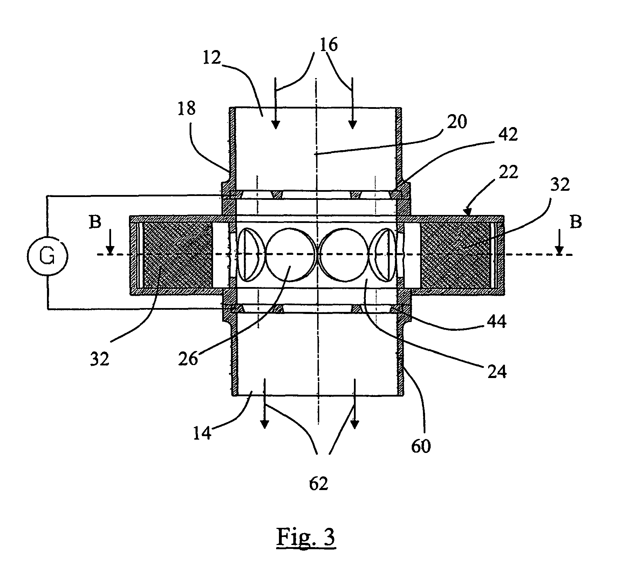

La figure 3 illustre un deuxième mode de réalisation, représenté en coupe selon un plan passant l'axe de symétrie 20 du dispositif. Dans le premier mode de réalisation représenté sur la figure 1, la chambre d'accélération 58 est placée à la suite de la chambre d'ionisation 24. Dans le deuxième mode de réalisation représenté sur la figure 3, la chambre d'ionisation est contenue dans la chambre d'accélération. Ainsi, les électrodes 42 et 44 sont placées respectivement en amont et en aval de la chambre d'ionisation 24. L'électrode 42 est disposée dans le conduit d'injection 18, au-dessus de l'enceinte 22 contenant les magnétrons 32. L'électrode 44 est disposée sous l'enceinte 22, fixée dans le conduit 60 lequel est relié à la tubulure d'admission d'air du moteur à combustion interne. Les électrodes sont reliées au générateur G de sorte que l'électrode 42 ou 44 forme respectivement une anode ou une cathode. Les moyens pour ioniser l'air sont identiques à ceux du premier mode de réalisation de la figure 1. La description faite en regard de la figure 2 s'applique donc au deuxième mode de réalisation de la figure 3. Un avantage de ce deuxième mode par rapport au premier mode est qu'il est plus court, et donc moins encombrant, du fait de la disparition du conduit 40.

Selon le procédé de l'invention, de l'air ambiant est aspiré à l'entrée 12 du dispositif dès la mise en marche du moteur. Cet air arrive dans la chambre d'ionisation 24 où il est soumis aux micro-ondes. Sous l'effet de ces radiations, des électrons sont arrachés des atomes principalement d'oxygène et d'azote, formant ainsi des ions chargés positivement. L'air est donc ionisé.

Dans le cas du premier mode de réalisation décrit (figure 1), l'air ionisé arrive à l'entrée du conduit d'accélération en traversant la plaque 46 au travers des trous 50 et 54. La différence de potentiel appliquée entre les plaques 46 et 48 crée un champ électrique dont les lignes de champ sont sensiblement parallèles à l'axe de symétrie 20. Les ions positifs sont alors accélérés entre l'anode 42 et la cathode 44. On passe alors d'un régime d'alimentation en air à un régime de suralimentation. La vitesse de l'air, et donc son débit, augmente avec la différence de potentiel appliquée entre les électrodes 42 et 44.

Dans le cas du deuxième mode de réalisation décrit (figure 3), l'air ionisé est immédiatement accéléré, dès sa formation, entre les électrodes 42 et 44. La chambre d'ionisation est alors contenue dans la chambre d'accélération délimitée par les deux électrodes 42 et 44.

La masse d'air accélérée est dirigée vers les conduits d'admission du moteur, dans la direction des flèches 62, en ayant éventuellement été refroidie. Un refroidissement de l'air accéléré peut en effet être nécessaire du fait que la compression de l'air n'est pas isotherme.

D'autres modes de réalisation que ceux décrits et représentés peuvent être conçus par l'homme du métier sans sortir du cadre de la présente invention. Il est par exemple possible d'utiliser plus de deux électrodes pour accélérer l'air ionisé.

## Revendications

1. Procédé de suralimentation en air d'un moteur à combustion interne, **caractérisé en ce qu'**il comporte les étapes suivantes :
- ionisation de l'air, et
- accélération de l'air ionisé par un champ électrique avant injection dans une chambre de combustion dudit moteur.

2. Procédé selon la revendication 1 **caractérisé en ce que** l'ionisation de l'air est effectuée en le soumettant à des ondes électromagnétiques de fréquences comprises entre 300 MHz et 300 GHz.

3. Dispositif (10) de suralimentation en air d'un moteur à combustion interne d'un véhicule, ledit moteur comprenant un circuit d'admission d'air dans lequel l'air admis est accéléré, **caractérisé en ce qu'**il comporte des moyens (24-32) pour ioniser l'air admis et des moyens (42-44) pour accélérer l'air ionisé à l'aide d'un champ électrique.

4. Dispositif selon la revendication 3 **caractérisé en ce que** lesdits moyens pour ioniser émettent des micro-ondes ionisant l'air admis.

5. Dispositif selon la revendication 4 **caractérisé en ce que** les moyens pour ioniser comportent une chambre d'ionisation (24) et une pluralité de magnétrons (32) disposés autour de ladite chambre d'ionisation.

6. Dispositif selon la revendication 5 **caractérisé en ce que** lesdits magnétrons (32) sont disposés en couronne autour de ladite chambre d'ionisation (24).

7. Dispositif selon l'une des revendications 3 à 6 **caractérisé en ce que** lesdits moyens pour accélérer l'air ionisé comportent une chambre d'accélération (58) comportant une entrée et une sortie, au moins deux électrodes (42-44) placées dans ladite chambre d'accélération, l'une (42) desdites électrodes constituant une anode et l'autre (44) une cathode, l'anode (42) étant située sensiblement vers l'entrée de la chambre d'accélération et la cathode (44) étant située sensiblement vers la sortie de la chambre d'accélération, et une source (G) de potentiel électrique continu reliée auxdites électrodes pour appliquer une différence de potentiel électrique entre lesdites électrodes, l'air ionisé étant accéléré entre lesdites électrodes.

8. Dispositif selon la revendication 7 **caractérisé en ce que** l'entrée de la chambre d'accélération est située en aval de la chambre d'ionisation.

9. Dispositif selon la revendication 7 **caractérisé en ce que** l'entrée de la chambre d'accélération est située en amont de la chambre d'ionisation, laquelle est contenue dans la chambre d'accélération.

## Claims

1. Method for supercharging an internal combustion engine with air, **characterized in that** it comprises the following steps:
- ionizing the air, and
- accelerating the ionized air using an electric field before injecting it into a combustion chamber of the said engine.

2. Method according to Claim 1, **characterized in that** the air is ionized by subjecting it to electromagnetic waves at frequencies ranging between 300 MHz and 300 GHz.

3. Device (10) for supercharging a vehicle internal combustion engine with air, the said engine comprising an air intake circuit in which the admitted air is accelerated, **characterized in that** it comprises means (24-32) for ionizing the admitted air and means (42-44) for accelerating the ionized air using an electric field.

4. Device according to Claim 3, **characterized in that** the said ionizing means emit microwaves that ionize the admitted air.

5. Device according to Claim 4, **characterized in that** the ionizing means comprise an ionizing chamber (24) and a plurality of magnetrons (32) positioned around the said ionizing chamber.

6. Device according to Claim 5, **characterized in that** the said magnetrons are arranged in a ring around the said ionizing chamber (24).

7. Device according to one of Claims 3 to 6,
**characterized in that** the said means for accelerating the ionized air comprise an acceleration chamber (58) comprising an inlet and an outlet, at least two electrodes (42-44) positioned in the said acceleration chamber, one (42) of the said electrodes constituting an anode and the other (44) a cathode, the anode (42) being situated substantially towards the inlet of the acceleration chamber and the cathode (44) being situated substantially towards the outlet of the acceleration chamber, and a source (G) of continuous electrical potential which is connected to the said electrode in order to apply a potential difference between the said electrodes, the ionized air being acceleration between the said electrodes.

8. Device according to Claim 7, **characterized in that** the inlet of the acceleration chamber is situated downstream of the ionizing chamber.

9. Device according to Claim 7, **characterized in that** the inlet of the acceleration chamber is situated upstream of the ionizing chamber, which is contained in the acceleration chamber.

## Patentansprüche

1. Verfahren zum Aufladen mit Luft eines Verbrennungsmotors, **dadurch gekennzeichnet, dass** es die folgenden Schritte enthält:
- Ionisieren der Luft und
- Beschleunigen der ionisierten Luft durch ein elektrisches Feld vor der Einspritzung in eine Brennkammer des Motors.

2. Verfahren nach Anspruch 1, **dadurch gekennzeichnet, dass** die Ionisierung der Luft ausgeführt wird, indem sie mit elektromagnetischen Wellen mit Frequenzen im Bereich von 300 MHz bis 300 GHz beaufschlagt wird.

3. Vorrichtung (10) zum Aufladen mit Luft eines Verbrennungsmotors eines Fahrzeugs, wobei der Motor eine Lufteinlassleitung enthält, in der die eingelassene Luft beschleunigt wird, **dadurch gekennzeichnet, dass** sie Mittel (24-32), um die eingelassene Luft zu ionisieren, und Mittel (42-44), um die ionisierte Luft mit Hilfe eines elektrischen Feldes zu beschleunigen, enthält.

4. Vorrichtung nach Anspruch 3, **dadurch gekennzeichnet, dass** die Ionisierungsmittel Mikrowellen aussenden, die die eingelassene Luft ionisieren.

5. Vorrichtung nach Anspruch 4, **dadurch gekennzeichnet, dass** die Ionisierungsmittel eine Ionisationskammer (24) und mehrere Magnetrone (32), die um die Ionisationskammer angeordnet sind, enthalten.

6. Vorrichtung nach Anspruch 5, **dadurch gekennzeichnet, dass** die Magnetrone (32) kranzförmig um die Ionisationskammer (24) angeordnet sind.

7. Vorrichtung nach einem der Ansprüche 3 bis 6, **dadurch gekennzeichnet, dass** die Mittel zum Beschleunigen der ionisierten Luft eine Beschleunigungskammer (58) aufweisen, die einen Eingang und einen Ausgang, wenigstens zwei Elektroden (42-44), die in der Beschleunigungskammer angeordnet sind, wovon eine (42) eine Anode und die andere (44) eine Katode bildet, wobei die Anode (42) sich im Wesentlichen beim Eingang der Beschleunigungskammer befindet und die Katode (44) sich im Wesentlichen beim Ausgang der Beschleunigungskammer befindet, und eine Quelle (G) für elektrisches Gleichspannungspotential, die mit den Elektroden verbunden ist, um zwischen den Elektroden eine elektrische Potentialdifferenz anzulegen, enthält, wobei die ionisierte Luft zwischen den Elektroden beschleunigt wird.

8. Vorrichtung nach Anspruch 7, **dadurch gekennzeichnet, dass** sich der Eingang der Beschleunigungskammer stromabseitig von der Ionisationskammer befindet.

9. Vorrichtung nach Anspruch 7, **dadurch gekennzeichnet, dass** sich der Eingang der Beschleunigungskammer stromaufseitig von der Ionisationskammer, die in der Beschleunigungskammer enthalten ist, befindet.
